# EUROPEAN PATENT APPLICATION

(11) **EP 2 672 254 A1**
(43) Date of publication of application: **11.12.2013**
(21) Application number: 12171387.9
(22) Date of filing: 08.06.2012
(51) Int. Cl.: G01N 21/55

(54) **SPR biochips for label-free analysis of complex biological and chemical samples and method of multiplex analysis**

(71) Applicant: The European Union, represented by the European Commission, 1049 Brussels (BE)
(72) Inventor: Marchesini, Gerardo, 21038 Sangiano (IT); Colpo, Pascal, 21020 Angera (IT); Rossi, François, 21033 Cittiglio (IT); Valsesia, Andrea, 21020 Ranco (IT)
(74) Representative: Office Freylinger

(57) **Abstract**

The present invention relates to a SPR sensor device and SPR. The SPR biochip sensor comprises a dielectric substrate and a SPR supporting sensor surface comprising a metallic layer on the substrate. The sensor surface is subdivided into a plurality of sensor sub-regions, preferably at least three. Each sensor sub-region is configured to support L-SPR and has a predetermined SPR optical response distinct from that of the other sub-regions.

## Description

### Technical field

The present invention generally relates to Surface Plasmon Resonance (SPR) based sensing systems, and more specifically to SPR sensors, and to a method of performing SPR multiplex analysis.

### Background Art

Surface Plasmon Resonance sensor devices have acquired a predominant role in the last 10 years. In fact, contrary to the conventional detection methods, SPR methods are label-free detection methods. Label-free methods present many advantages, such as allowing the kinetic resolution of the bioreactions and not requiring complicated sample preparation methods.

SPR sensors rely on the well-known SPR phenomenon, which involves one or more surface-bond electromagnetic waves that propagate at an interface between a metallic material (gold or silver or in general a noble metal) and a dielectric material. Each surface-bond electromagnetic wave, which is due to a collective oscillation or free electrons at the metal dielectric-interface, propagates with its highest intensity parallel to this interface and decays exponentially.

SPR finds particular application in biosensor systems capable of detecting interactions between biomolecules or biochemical molecules, for example interactions between antigens and antibodies, enzymes and ground substances, endocrines and receptors, nucleic acids and nucleic acids, etc. In particular, many SPR biosensor systems have receptors or ligands attached on their sensor surface so as to detect changes in the light-SPR coupling condition caused by refractive index changes at the sensor surface when biochemical molecules or biomolecules interact with (bind to) these receptors or ligands. A change in the SPR coupling condition implies an alteration of the characteristics of the light wave coupled to the surface plasmon, e.g.: coupling angle, coupling wavelength, intensity, phase. The classification of a SPR sensor then depends on the property of the light wave modulated by a surface plasmon that is measured. Such SPR biosensor systems are suitable for measuring for example concentrations of biomolecules or biochemical molecules in solutions, etc.

There are different kinds of SPR based systems: SPR-spectroscopy (non-imaging) and SRP-imaging (SPRI) (also known as SPR-microscopy - SPRM).

In conventional SPR-spectroscopy, a light beam is passed through a prism provided on one of its sides with a glass slide coated with a thin, noble metal (the Kretschmann configuration). The metallic layer is in contact with a dielectric material (e.g. air, water or buffer liquids). The light beam is reflected off the thin metal coating. The physical properties of the reflected beam (spectrum of the reflected beam, i.e. the intensity of the reflected light versus the wavelength and versus the angle of reflection) depend on the refractive index of the dielectric layer comprised within the first 100 nm above the surface of the noble metal. In this way, by monitoring in real-time, the changes of the property of the reflected beam, one can monitor in real-time the changes of the refractive index within the volume comprised in the first 100 nm above the surface of the noble metal. In SPRI, a similar Kretschmann configuration can be used, but different regions of the surface are simultaneously probed by a parallel light beam that covers a larger area on the gold surface than in SPR-spectroscopy. The reflected light intensity from the illuminated area of the surface is monitored at the specular angle by a CCD detector array, such that each pixel on the CCD array detector corresponds to a different position on the metal surface. SPRI presents the main interest that multiplexed analysis of samples may be carried out.

SPRI systems share the design principle of a sensor device (or chip) with probe microarrays (microspots of different biochemical probes), which are then read by an SPR-based microscope. Typically, the sensor comprise a plurality of spatially distinct microarrays in a 1*1cm² area, each microarray containing a hundred (or more) different spots. Parallel and label-free processing of multiple interactions in real-time based on SPRI measurements has been reported and applied to the study of reversible protein binding to DNA or of peptide or protein arrays (Campbell et al, "SPR microscopy and its applications to high-throughput analyses", Biomaterials, 28, 2007, 2380-2392). In particular, a parallel monitoring of a hundred DNA-DNA interactions has been demonstrated (Mannelli et al, "DNA immobilization procedures for surface Plasmon resonance imaging (SPRI) based microarray", Biosensors and Bioelectronics, 2006). Several SPR imaging systems are commercially available, but are expensive and bulky, i.e. difficult to transport.

To address the issue of portability, SPRI systems based on periodic nanohole arrays, involving mainly localized SPR (L-SPR) have been developed. Such sensors may comprise a multiplicity of spatially distinct sensing areas comprising periodic nanohole arrays. The sensor is illuminated and the refractive index variations across the sensor are translated into an intensity or contrast image acquired by a CCD or CMOS camera in real time. These modern SPRI systems have a simplified imaging setup and enable the use of a stable laser source. However, despite compactness and portability, these SPRI systems share the same technical problem with other SPRI systems: their sensitivity is reduced by an order of magnitude compared to SPR-spectroscopy systems.

This is typically due to the fact that, in order to perform the imaging process, their sensing principle is based on the variation of intensity (or contrast) of the transmitted light from the sensor surface. Furthermore, since they are based on direct intensity variations, they are vulnerable to stray light and spatial homogeneity in the light source.

Thus, there is a real need to develop a SPR technique, which may be portable, allowing multiplexed analysis while showing an improved sensitivity compared to the known SPRI systems.

### General Description of the Invention

In order to overcome the above-mentioned problem, the present invention proposes a SPR analysis method using a sensor device of particular design that is spectrally interrogated.

The present SPR sensor device comprises a dielectric substrate and a SPR supporting sensor surface comprising a metallic layer on the substrate. The sensor surface is subdivided into a plurality of sensor sub-regions, preferably at least three, each sensor sub-region being configured to support surface plasmon resonance waves and having, by design, a SPR optical response distinct from that of the other sub-regions.

The present SPR sensor device is thus spatially divided into a plurality of separate sub-regions, each forming an individual plasmonic micro-sensor having a specific SPR optical/spectral response. Each sensor sub-region can be monitored on the basis of its specific optical response, which is unique in the sensor. The present SPR sensor hence allows carrying out multiplexed analysis through spectral interrogation, whereby the observable of interest is the position (wavelength or frequency) of the plasmon resonances, i.e. the resonance peaks.

In practice, each sensor sub-region is preferably functionalized with a biological or chemical probe able to bind a specific analyte. Depending on the type of assay, the sensor sub-regions may be functionalized in different manners, e.g. by varying the type of probes and/or the probe density (amount of probe/unit area).

It shall be appreciated that while conventional SPRI systems rely on a translation of refractive index variations across the sensor into intensity or contrast images acquired by a CCD or CMOS camera in real time, the present method relies on a spectral interrogation of the sensor sub-regions, each forming an individual plasmonic sensor with a calibrated, respective optical response.

In order to monitor the surface plasmon response of each sub-region, the sensor is scanned over a range of wavelengths and sensor spectra are determined before and after molecular binding at the sensor surface for each sub-region. The detection of analytes of concern may thus be based on a change or difference in the measured surface plasmon resonance wavelength or frequency, before and after contacting with the one or more samples.

The SPR optical response of each sensor sub-region is thus designed to have a predetermined surface plasmon resonance frequency, or surface plasmon resonance wavelength, (i.e. the resonance position) under predetermined illumination conditions. This is achieved by proper configuration of the sensor so that each sub-region has a different plasmonic nanostructure.

Any appropriate technology may be used to manufacture a sensor comprising regions forming individual sensors having a nanostructure supporting surface plasmons, while each sensor region however has its own features. As it is known in the art, a plasmonic nanostructure generally comprises a certain distribution pattern of metallic and dielectric material adapted to carry surface plasmon. In the present sensor, the plasmonic nanostructure of each sensor sub-region may be based on nanoparticles, nanometric holes, pillars or other cavities, preferably organized as patterns or arrays in a periodic or non-periodic manner.

Preferably, the plasmonic nanostructures comprise a periodic array of nanocavities of cylindrical (nanoholes) or other, e.g. frustoconical shape (also referred to as pillars). The cavities dimensions are in the nanometer range and, as it is known, in order to stimulate surface plasmons, the cavities have sub-wavelength dimensions, i.e. below the wavelength of the incident light.

Depending on the technology, the cavities may be empty or filled, partly or entirely, with a dielectric, e.g. polyacrylacid (ppAA), polystyrene (PS) or poly-methyl-methacrylate (PMMA) or combinations thereof or any other dielectric material or polymer.

As it will further be understood by those skilled in the art, the SPR optical response of each sensor sub-region, respectively their plasmonic nanostructure, is determined by a plurality of SPR-response affecting parameters. For each sub-sensor to have a unique response in the sensor, each sub-region is configured to have a unique set of SPR response affecting parameters. A same SPR response affecting parameter could be varied from one region to another, in a unique manner. However, since a plurality of the SPR-response affecting parameters may be individually modulated, a different combination of several parameters may be aimed to obtain a different and distinct SPR response for each sub-region.

The SPR response affecting parameters may be one or more of the following: a lattice constant of a periodic array, the shape of nanofeatures in the nanostructures, the area of the nanofeatures, the height of the nanofeatures, the cross-section of the nanofeatures, the type of metal or alloy layer in each sub-region, and a polymer refractive index in the nanoplasmonic structure.

By tuning at least one of the above SPR-response affecting parameters, it is possible to design a SPR sensor with distinct well-defined resonance positions covering a predetermined bandwidth, which are well separated in the spectrum and hence avoiding cross-talk between them. The present SPR sensor device thus allows carrying out multiplexed analysis without using a CCD camera. The SPR sensor can be designed such that the resonance positions are distributed in a band with covering the Visible-Near Infrared spectrum, but it may also cover the UV and/or IR regions.

It may be noticed that while each plasmonic sub-region is designed to have a distinct resonance position, one may further take into account the nanostructure geometry to optimize the sensor in view of future tests. For example, one may design palsmonic sub-regions with small nanocavities for detecting small molecules and comparatively larger nanocavities for detecting larger molecules, or even microcavities for bacteria and cells, etc.

The lattice constant of the periodically patterned nanofeatures is generally considered as the parameter influencing the most the SPR frequency/wavelength response of a sub-region. In one embodiment, the plasmonic nanostructure comprises a metallic layer with a periodic array of nanometric pillars, and the lattice constant is the distance between two neighboring nanometric pillars. More generally, the lattice constant is the unit distance between nanofeatures, e.g. between nanoholes or nanopillars or other nanocavities. Varying the lattice constant between the different sensor sub-regions may thus be a first approach to define a distinct optical response (resonance position) for each sub-region. In one variant, each sub-region of the SPR sensor may thus comprise a periodic array of nanofeatures with a distinct lattice constant, as compared to the other sub-regions. For the present sensor, one may consider periodic arrays having a lattice constant comprised between 100 nm and 2000 nm, in particular between 200 nm and 1000 nm.

In practice, the area occupied by a sensor sub-region, respectively the area occupied by the plasmonic nanostructure, on the biosensor may, e.g., vary from about 100 µm² to a few cm².

The height of the dielectric patterned nanofeatures may be comprised within the range of 10 to 500 nm, in particular between 50 and 200 nm.

The metal composition of the metallic layer may be different from one sub-region to another one. The metal may be chosen amongst: gold, silver, copper, platinum, aluminum, titanium, nickel or alloys comprising one or more thereof.

The effective refractive index of the polymer filling in the nanocavities may be different from a sub-region to another one. The effective refractive index may be comprised within the range of 1 to 3 and in particular between 1 and 1.8.

As already mentioned, tuning one or more of the above parameters allows predefining the SPR optical response of each sub-region in a distinct manner. Thus, the SPR microsensors corresponding to the sub-regions may be spectrally and simultaneously interrogated since their resonance positions are well defined, unique and distinguishable. The obtained interrogation spectrum shows several separated peaks, each of these peaks corresponding to the SPR response of one sub-region.

For ease of detection, the present sensor device is advantageously configured so that two neighboring SPR peaks are sufficiently separated. Therefore, sensor is advantageously designed such that the plasmon resonance peak of a respective sub-region is centered in the spectrum at a wavelength which is separated from the SPR peaks positioned before and after, by a value which is greater than the Full Width at Half maximum of said peaks positioned before and after.

It remains to be noted that the above SPR-affecting parameters not only define the resonance frequency, but also affect the sensitivity. The present invention therefore also allows achieving a good detection sensitivity. Indeed, those skilled in the art will appreciate that it is possible to tune the detection sensitivity of each sub-region to molecules of different size by a proper design of the size of the nanostructures. In this way, the different sub-regions can be specifically optimized for detecting different molecules.

The present invention also provides a SPR sensing system comprising:
- a SPR sensor as previously defined,
- a parallel white or multi-chromatic light beam source,
- a spectrometer.

The spectrometer may advantageously be a portable spectrometer. Accordingly, the SPR system of the present invention is compact and easy to use. In such system, the control unit is thus configured to monitor the wavelength or frequency (i.e. the optical response) of the surface plasmon resonance position of each sub-region in order to detect a shift thereof attributable to the binding of analytes at the respective sensor. The detection process is thus operated on the basis of variations of wavelength or frequency, and not of beam intensity or contrast.

Although initially developed for SPR-based detection, it will be appreciated that the present SPR sensor can be of interest in molecular, chemical and/or biochemical detection techniques other than surface plasmon-based detection systems, in particular where the phenomena of interest occurring within few nanometers close to the nano-structured sensor surface.

Accordingly, the present SPR sensor can be used in analysis techniques based on SERS (Raman spectroscopy on nanostructured surfaces), fluorescence and SALDI (Surface Assisted Laser Desorption Ionization). As it will be understood by those skilled in the art, the nano-cavities/structures in the metallic layer have this special property of condensing the light at their top. This ability is derived from the Surface Plasmon Resonance between the cavities, the structure and the incoming light. SERS and fluorescence are thus mediated by the SPR effect, and so they are dependent on the plasmon resonance occurring at each sensor sub-region. As explained herein, it is possible to define where the SPR positions are situated in the spectrum (theoretically or experimentally) for each sub-region of the present sensor, and the SPR effect taking place in each sub-region will also affect the SERS, fluorescence or SALDI effects.

In other words, since the sensor is spectrally multiplexed in terms of SPR resonances, it is by consequence also spectrally multiplexed in terms of SERS, fluorescence and SALDI.

### Brief Description of the Drawings

The present invention will now be described, by way of example, with reference to the accompanying drawings, in which:
Fig. 1 is a schematic view of a SPR sensor according to one embodiment of the present invention;
Fig. 2 is a spectrum obtained by interrogating a SPR sensor according to the present invention;
Fig. 3. is a scheme representing a SPR system according to the present invention; and
Fig. 4: is a principle section view across the sensor device of Fig.1, through sub-regions D1 and D2.

### Description of Preferred Embodiments

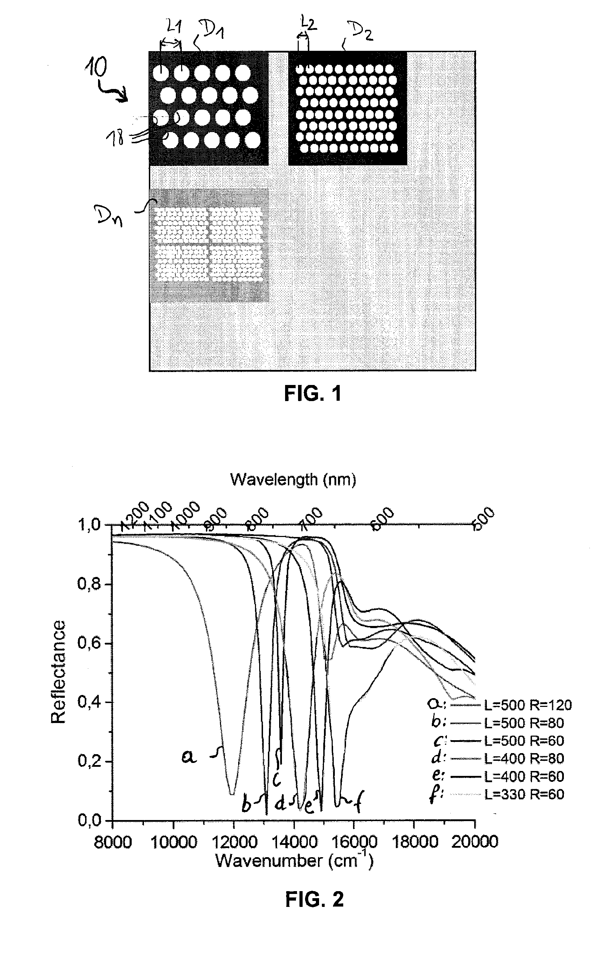

Fig.1 shows a schematic view of an embodiment of the SPR sensor device 10 according to the present invention. The sensor device 10 comprises a dielectric substrate 12, which may be in glass or other suitable materials, and thereon a SPR supporting sensor surface 14 comprising a metallic layer 16. The SPR sensor 10 comprises a plurality of sub-regions Dn, at least 3, corresponding to SPR micro-sensors. In the present variant, each sub-region Dn describes a square with the same width, e.g. 100 µm. Thus, all sub-regions Dn have an identical area and shape, although this is not required and they could vary in area and/or shape. In particular, the general shape of the sub-regions is not critical and can also be rectangular, circular or other.

It shall be appreciated that each sensor sub-region is configured to support surface plasmon resonance waves and has a predetermined SPR optical response distinct from that of the other sub-regions and thus forms an individual SPR sensor. In other words, each sub-region has a predefined plasmonic nanostructure that provides a calibrated, distinct and well-defined SP resonance. As it will be understood, the SPR optical response defines a resonance position, typically expressed in wavelength or frequency, which in practice-in a spectrum-is formed as a peak. As a result, SP coupling phenomenons, respectively variations of refractive index, can be individually monitored at each sensor sub-region on the basis of the predetermined, distinct SP resonance positions. Multiplexed analysis of the various sub-regions can thus be performed by spectral interrogation of the sensor, without any imaging system.

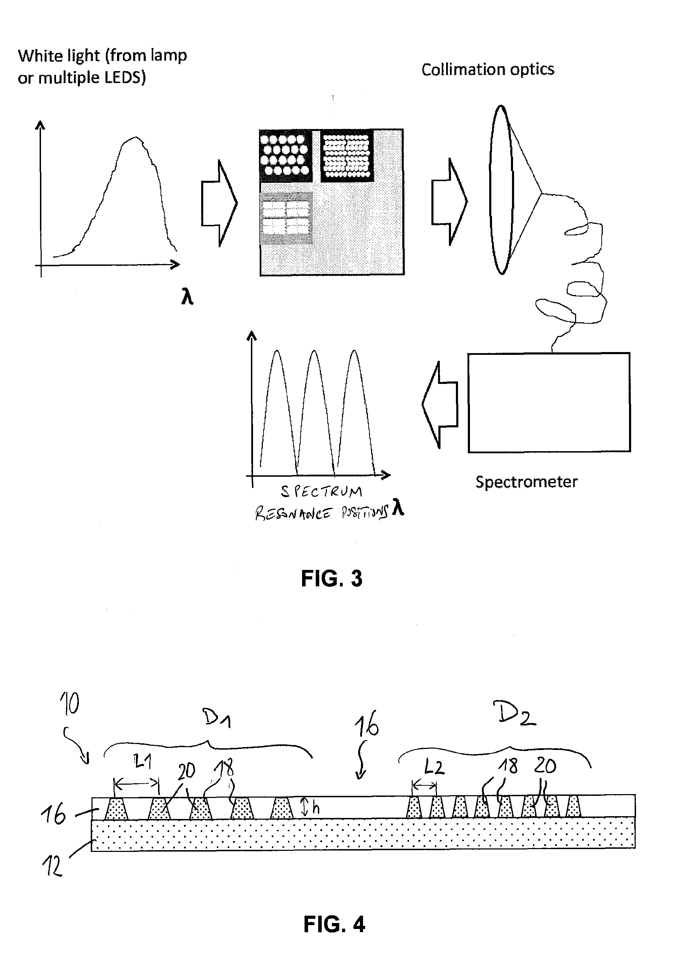

As can be understood from Figs.1 and 4, each sub-region Dn is defined as a plasmonic nanostructure with a periodic array of nanofeatures (the elements of the pattern). In the preferred variant illustrated in Figs.1 and 4, the nanofeatures are nanocavities 18 taking the form of polymeric pillars that are arranged as a periodic array within the metal layer 16, e.g. gold. Each of these arrays is characterized by a different lattice constant (distance between two neighboring pillars, noted Ln) which may increase e.g. from 200 nm to 1000 nm.. The lattice constant is one of the parameters, which influences the most the SPR resonance position. Each sub-region Dn thus has a well-defined SPR optical response easily distinguishable in the measured spectrum. As explained above, each sub-region 1, 2...n is set to have a unique set of SPR influencing parameters and a unique resonance position.

As already mentioned, other SPR response affecting parameters may be one or more of the following:, the shape of nanofeatures (here the cavities or pillars) in the nanostructures, the area of the nanofeatures, the height of the nanofeatures, the cross-section of the nanofeatures, the type of metal or alloy layer in each sub-region, and a polymer refractive index in the nanoplasmonic structure.

Turning now again to Fig.4, one can distinguish the change in lattice constant L1, L2 of the array of nano-cavities 18 from region D1 to D2. In this variant, the cavities 18 are filled with dielectric material 20 and are therefore referred to as pillars. The height h of the nanofeatures/pillars 18 is not changed, however the opening and base areas of the frustoconical pillars are different in sub-regions D1 and D2.

For operation in general with probe light selected from the UV-VIS-NIR-IR spectrum, the cavities may be designed to have an opening width (say diameter or equivalent diameter) in the range of 50-250 nm, while the bottom width may be in the range of 100-450 nm or even bigger.

In order to avoid an overlap of SPR peaks in the interrogation spectrum, nanostructures are advantageously designed so that the SPR peak of a respective sub-region is centered in the spectrum at a wavelength, which is separated from the SPR peaks positioned before and after by a value that is greater than the Full Width at Half maximum of these neighboring SPR peaks.
This rule for discriminating between peaks is usual in the art and can be mathematically expressed as follows:
Supposing that the resonance peak of each sub-region has the characteristics: a "Centre" at a defined wavelength and a Full Width at Half maximum "FWHM"
Peak (n) is defined by: Centre(n) and FWHM(n)
Peak (n+1) is defined by Centre(n+1) and FWHM(n+1)
The sensor device is preferably designed so that the following condition is met:
Centre(n+1)>Centre(n)+FWHM(n).

The present SPR sensor device can be constructed by means of existing technologies, as will be explained below. In this connection, one may note that any metal adapted for L-SPR may be used for the L-SPR supporting metal layer. The metal may namely be selected from the group comprising: gold, silver, copper, platinum, aluminium or alloys comprising one or more thereof.

In the context of the present application, the term "dielectric", as used for the substrate, is meant to designate materials that are not electrical conductors and are able to be polarized by the plasmon field and, accordingly, encompasses dielectric materials such as sapphire, glass or polymers, but also appropriate semiconductor materials.

For ease of use, a microfluidic layer (not shown) may be provided on top of the metal layer, as is usual in the art. Such microfluidic layer typically comprises channels arranged to selectively bring test samples in contact with a respective sub-regions of the sensor.

Fig.2 shows numerically simulated spectra corresponding to a SPR sensor designed in accordance with the present invention. This SPR sensor comprises six sub-regions with different plasmonic nanostructures, here determined by unique combinations of lattice constant and cavity size in order to exhibit distinct SPR responses, as illustrated by the distribution of the resonance positions. Fig.2 gives the full spectrum for each sub-region of the sensor, together with the lattice constant L and the inner radius R of the nanocavities of each sub-region. Fig. 2 thus shows how the spectral position of the plasmonic resonances can be adjusted by varying two, namely L and R, of the many parameters. The selection of the good resonances (to avoid overlapping) is done by conforming to the FWHM rule described before. Relying on experimentation, the resonance positions can hence be properly calibrated, in the present example with 6 well-tuned resonance positions in the NIR-VIS spectrum.

With a spectrometer having broader detection capability, .e.g including the IR and/or UV wavelength, one may easily define more than 6-well-tuned resonance positions, e.g. up to 15 but preferably 10.

The sub-regions provided on the SPR sensor may be in various shapes such as: rectangular, circular, triangular, oval, and square. The footprint area of each sub-region may be as low as a few µm² and vary up to a few cm². Preferably each sensor sub-region has minimum area of 10 µm²

For typical SPR analysis, each sub-region of the SPR sensor device is preferably functionalized with a probe able to bind a specific analyte. The probe may be any kind of substance to be attached to the sensor and having a defined binding specificity to an analyte to be detected. The probe may be any molecule, chemical , natural or biological substance or part thereof. For bioassays the probes may e.g. comprise: antigen/antibodies, enzymes, proteins, oligonucleotides, etc...

Conversely, the analyte may be any molecule, chemical substance, biomolecule or constituent of interest that is to be detected by means of the present sensor as a result of the binding specificity of the analyte with the probe attached on the SPR sensor. The analyte may be any kind of ligand, molecule, biological substances, e.g, proteins, enzymes, peptides, organic and inorganic chemical substances, oligonucleotides, antibodies, etc... in general any kind of molecule that can be recognized by a specific biochemical reaction.

The SPR sensor may be prepared using lithographic techniques. The following, preferred manufacturing technique is based on Valsesia et al., in "Fabrication of nanostructured polymeric surfaces for biosensing devices", Nano letters, Vol.4, No.6, 1047-1050, 2004). A layer of poly-acrylacid (ppAA) is deposited over a glass substrate; and a subsequent layer of polystyrene beads (PS) are deposited over the ppAA. The ppAA and PS layers are etched by O₂ plasma to form a grating structure comprising spaced pillars of ppAA separated by a sub-micrometric distance. The pillars have a tapering shape from the basis to top. Gold or another metal is then deposited over the pillars to fill-in the gaps between neighbouring pillars, and the remainder of the PS mask is removed, obtaining a periodic gold nanograting (respectively a gold layer with an array of nanocavities/pillars). Other possible materials for the dielectric pillars are polystyrene or poly-methylacrylate, etc. One may note that the lattice constant of the patterned nanofeatures (i.e. the pillars) may be controlled by the size of the polystyrene beads constituting the PS mask. A microspotter may be used to print on the same dielectric substrate arrays of spots with PS beads of different sizes.

The preparation of the present SPR sensor may of course comprise a subsequent step of functionalizing each sub-region with a probe able to bind a specific analyte, e.g. by using the same microspotter.

The present invention also concerns the use of the SPR sensor according to the present invention for screening biological and/or chemical samples. In particular, the SPR sensor according to the present invention may be used in a variety of point-of-care measurements (medical tests, food quality control or environmental monitoring).

It is also provided a SPR method for screening biological or chemical samples comprising the steps of:
- providing a SPR sensor according to the present invention, where each sub-region is functionalized with a probe;
- depositing a biological and/or chemical sample on the SPR sensor;
- submitting the SPR sensor to parallel white or multi-chromatic light beam;
- acquiring the resulting scattered light by a spectrometer (or generally spectrophometer);
- analysing the spectrum obtained, including determining a shift in plasmon resonance position (wavelength or frequency) for at least one sensor sub-region by comparison to a spectrum obtained for the same sensor sub-region without the sample.

The light beam used for illuminating the SPR sensor may be a parallel white or multi-chromatic light beam. In fact, the following practical options are available:

- using white light from a white LED, from a lamp, etc. and recording/acquiring the whole spectrum. In this way the different plasmon resonances in each sub-region will be excited by the same source.

- using a multiple LED source, each LED being centred at plasmon resonances of a respective sub-region. With such multiple LED source, all LEDs can be switched on at the same time, or they can be turned on in an alternating manner (one at a time) in order to excite only one resonance, respectively one sub-region, at a time.

Fig.3 summarizes an assay procedure. The SPR sensor is designed as described above and hence comprises a plurality of sensor sub-regions characterized by distinct resonance positions, which have been functionalized with different biological or chemical probes. In use, the SPR sensor is illuminated from the substrate side by a parallel white beam. The parallel white light beam passes though the SPR sensor and each sub-region is thus illuminated. The white light beam has a frequency range and incident angle known to be able to excite SPR at each sub-region of the sensor. Preferably, the SPR sensor is designed so that the permitted frequencies of SPR correspond typically to visible/near-infrared spectrum of light. Once it has passed through the SPR sensor, the parallel white beam is scattered according to the different SPR resonance frequency responses of the sub-regions. By design, each sub-region has a distinct SPR response, which is obtained a unique plasmonic nanostructure configuration . The resulting light is then collected and guided by collimating optics to the spectrometer. In the spectrometer, the full spectrum is acquired, which includes the different SPR resonance frequency responses obtained from the sensor. The spectrum obtained shows a plurality of distinct peaks corresponding to SPR resonance frequency responses of the sub-regions (similar to Fig.2).

In practice, as it is known, the detection procedure in SPR-sensing is based on a shift of the resonance peak, before and after binding of ligand to the probe attached to the sensor.

Therefore, in the above procedure of Fig.3, a spectrum is first acquired with the sensor device flown with carrier medium, e.g. buffer saline solutions, or biological media (serum, etc.). And one or more spectra are subsequently acquired once the analytes are introduced in the carrier medium and brought into contact with the SPR sensor device.

In the system of Fig.3, the monitoring of the resonance position of each sub-region is thus typically carried out by measuring the wavelength or frequency of a respective resonance position, and the detection of an analyte is determined by comparison of wavelength or frequencies values derived from the acquired spectra, not in terms of intensities or contrast values.

## Claims

1. A SPR analysis method comprising:
- providing a SPR sensor device comprising :
a dielectric substrate (12) and a SPR-supporting sensor surface comprising a metallic layer (16) on said substrate,
wherein the sensor surface is subdivided into a plurality of sensor sub-regions (Dₙ), preferably at least three, each sub-region being preferably functionalized to bind to a specific analyte;
wherein each sensor sub-region (Dₙ) is configured to support L-SPR and having a SPR optical response distinct from that of the other sensor sub-regions;
- monitoring the surface plasmon resonance frequency or wavelength at the sensor sub-regions when contacting the sensor surfaces with one or more samples comprising one or more analytes.

2. The method according to claim 1, wherein the monitoring of SPR frequency or wavelength involves:
- illuminating the sensor sub-regions with incident test light to excite surface plasmons;
- measuring the spectrum of the test light as reflected or transmitted from the sensor device.

3. The method according to claim 1 or 2, wherein a spectrometer device is used to determine the surface plasmon resonance position for each sensor sub-region under test.

4. The method according to claim 1, 2 or 3, comprising detecting the one or more analytes based on a change or difference of the measured surface plasmon resonance wavelength or frequency before and after contacting with the one or more samples.

5. A SPR sensor device comprising:
a dielectric substrate (12);
a SPR supporting sensor surface comprising a metallic layer (16) on said substrate, said sensor surface being subdivided into a plurality of sensor sub-regions (Dₙ), preferably at least three;
**characterized in that** each sensor sub-region is configured to support L-SPR and has a predetermined SPR optical response distinct from that of the other sub-regions.

6. The SPR sensor device according to claim 5, wherein said SPR optical response is the surface plasmon resonance frequency or wavelength of the respective sensor sub-region (Dₙ) under predetermined illumination conditions.

7. The SPR sensor device according to claim 5 or 6, wherein each sensor sub-region has a different plasmonic nanostructure; and/or said sensor comprises a number of sub-region equal to any integer between 3 and 15, preferably 3 and 10.

8. The SPR sensor device according to claim 5, 6 or 7, wherein the sensor sub-regions have a plasmonic nanostructure based on nanoparticles, nanometric holes, pillars or other cavities, preferably organized as patterns or arrays in a periodic or non-periodic manner.

9. The SPR sensor device according to any one of claims 5 to 8, wherein the SPR optical response of each sensor sub-region, respectively their plasmonic nanostructure, is determined by a plurality of SPR-response affecting parameters; and each sensor sub-region has a unique set of SPR response affecting parameters.

10. The SPR sensor device according to claim 9, wherein said SPR response affecting parameters comprise one or more of the following: a lattice constant of a periodic array, the shape of nanofeatures in said nanostructures, the size of the nanofeatures, the height of the nanofeatures, the cross-section of the nanofeatures, the type of metal or alloy layer in each sub-region, a polymer refractive index in the nanoplasmonic structure.

11. The SPR sensor device according to any one of claims 5 to 10, wherein the SPR peak of a respective sub-region is centered in the spectrum at a wavelength which is separated from the SPR peaks positioned before and after, by a value which is greater than the Full Width at Half maximum of said peaks positioned before and after.

12. The SPR sensor device according to any of claims 5 to 11, wherein each sub-region (Dₙ) is functionalized with a probe able to bind a specific analyte.

13. Use of the SPR sensor according to any one of claims 5 to 13 in the method of claims 1 to 4.

14. A SPR sensing system comprising:
- a SPR sensor according to any of claims 5-13,
- a parallel white or multi-chromatic light beam source,
- a spectrometer, preferably a portable spectrometer.

15. Use of the SPR sensor according to any one of claims 5 to 13 in a molecular detection method based on Fluorescence, SERS or SALDI.
